# EUROPÄISCHE PATENTSCHRIFT

(11) **EP 0 188 764 B1**
(45) Veröffentlichungstag und Bekanntmachung des Hinweises auf die Patenterteilung: **03.02.1993**
(21) Anmeldenummer: 85116187.7
(22) Anmeldetag: 18.12.1985
(51) Int. Cl.: G02B 6/34, G01J 3/18

(54) **Optische Anordnung mit einem Konkavspiegel oder Konkavgitter**
Optical arrangement with a concave mirror or grating
Arrangement optique avec un miroir ou réseau concave

(30) Priorität: 21.12.1984 DE 3446726
(43) Veröffentlichungstag der Anmeldung: 30.07.1986
(73) Patentinhaber: Firma Carl Zeiss, D-73446 Oberkochen (DE); CARL ZEISS-STIFTUNG HANDELND ALS CARL ZEISS, D-89518 Heidenheim (Brenz) (DE)
(72) Erfinder: Bittner, Reinhold Ferdinand, D-7074 Mögglingen (DE)

(56) Entgegenhaltungen:
- EP-A- 0 110 201
- EP-A- 0 121 812
- DE-A- 2 205 728
- DE-A- 2 906 440
- US-A- 4 274 706

## Beschreibung

Die vorliegende Erfindung betrifft eine optische Anordnung zur Abbildung der Ein- oder Austrittsflächen von Lichtleitfasern oder von Spektrometerspalten. Bevorzugtes Anwendungsgebiet der Erfindung sind Spektrometer einschließlich der Beleuchtungseinrichtung, sowie Multiplexer und Demultiplexer für die faseroptische Informationsübertragung.

Sphärische Konkavspiegel zeigen, wenn der Einstrahlwinkel von Null verschieden ist, einen mit dem Einstrahlwinkel zunehmenden Astigmatismus. Dieser läßt sich zwar durch die Verwendung von torischen oder elliptischen Spiegeln korrigieren; derartige Spiegel sind aber aufwendig in der Herstellung und daher teuer. Auch sphärische Konkavgitter zeigen diesen Astigmatismus, weil ihre Abbildungseigenschaften naturgemäß denen von sphärischen Konkavspiegeln ähnlich sind. Für holographisch hergestellte Konkavgitter sind zwar gute Korrekturmöglichkeiten des Astigmatismus durch geeignete Wahl der Quellpunkte bekannt (siehe z.B. R. Bittner, Optik 64, 185 (1983)), jedoch können konventionelle Gitter durch ihren Blazewinkel im sichtbaren und infraroten Spektralgebiet einen höheren Wirkungsgrad haben, so daß sie auch heute noch eine große Bedeutung haben. Außerdem ist man bei holographisch hergestellten Konkavgittern durch die Festlegung der Quellpunkte zur Bildfehlerkorrektur in der geometrischen Anordnung von Gitter, Eintrittsspalt und Spektrenebene sehr eingeengt, so daß ein weiterer Freiheitsgrad für Korrekturmöglichkeiten vorteilhaft wäre.

Wellenlängen-Multiplexer und -Demultiplexer mit Konkavgitter und Schichtwellenleiter sind aus US 4 274 706 und EP 0 121 812 bekannt. In der US-Schrift wird der gesamte Raum zwischen Gegenstandsebene, Gitter und Bildebene vom Schichtwellenleiter ausgefüllt, in der EP-Schrift schließt er an das Gitter an und sind Lichtleiter-Ausgleichsstücke zur Anpassung an Ein- und Ausgangs-Lichtleitfasern vorgesehen.

Das Gitter wird jeweils nur als schmaler Streifen, der in Furchenrichtung die Höhe des Schichtwellenleiters hat, ausgeleuchtet. Astigmatismus ist daher kein Problem.

Die DE 29 06 440 A1 gibt einen Spektrometer genannten Gas-Brechzahlsensor mit einem ausgedehnten lichtleitenden Kristall an, dessen Totalreflexion durch das Gas beeinflußt wird.

Zur Verbesserung der Beleuchtung dieses Kristalls wird ein schräg beleuchteter sphärischer Spiegel zur Erzeugung einer astigmatischen Abbildung der Lichtquelle auf Ein- bzw. Austrittsfläche des Kristalls eingeführt. Im Ergebnis kompensieren sich die astigmatischen Eigenschaften von Kristall und Spiegel. Ein Bezug zu anders gearteten Anwendungen wird nicht hergestellt.

Der vorliegenden Erfindung liegt daher die Aufgabe zugrunde, eine möglichst einfache Korrekturmöglichkeit für den Astigmatismus von Konkavspiegeln und Konkavgittern anzugeben, bzw. bei holographisch hergestellten Konkavgittern einen weiteren Freiheitsgrad für Korrekturmöglichkeiten zu erhalten.

Die gestellte Aufgabe wird mit den Merkmalen des Anspruchs 1 gelöst.

Für die Korrektion weiterer Abbildungsfehler, z.B. der sagittalen Koma, kann es vorteilhaft sein, wenn die reflektierenden Flächen des Schichtwellenleiters gekrümmt sind. Besonders vorteilhaft ist dabei die Ausbildung der reflektierenden Flächen als konzentrische Kugelflächen.

Insbesondere bei Wellenlängen-Multiplexern ist es vorteilhaft, zum Ausgleich der Wellenlängentoleranzen der Strahlngsquellen die reflektierenden Flächen keilförmig zueinander anzuordnen.

Eine vorteilhafte Ausführungsform der Erfindung ist gekennzeichnet durch eine Beleuchtungseinrichtung mit einem Konkavspiegel und einer Beleuchtungsquelle. Bei einer derartigen Anordnung läßt sich durch den Schichtwellenleiter ein großer Strahlungsfluß von der Beleuchtungsquelle z.B. in eine Lichtleitfaser einbringen.

Andere vorteilhafte Ausführungsformen sind Spektrometer mit Konkavgittern, wobei durch den Schichtwellenleiter ein erheblicher Energiegewinn erzielt wird.

Weitere vorteilhafte Ausführungsformen sind Wellenlängen-Multiplexer und Demultiplexer mit einem Konkavgitter, bei denen die Zu- und Ableitung der Strahlung z.B. durch Lichtleitfasern erfolgt.

In vorteilhaften Ausführungsformen ist das Konkavgitter in bekannter Weise aus mindestens zwei Bereichen aufgebaut, die mit unterschiedlich geformten Diamantsticheln geteilt sind. Auf diese Art lassen sich gute Energieverhältnisse über einen großen Wellenlängenbereich erreichen.

Besonders vorteilhaft ist die Kombination mit einer zweiten Anordnung mit einem Konkavspiegel oder Konkavgitter, wobei für beide Anordnungen ein gemeinsamer Schichtwellenleiter verwendet wird.

Die Erfindung wird im folgenden anhand der in den Figuren 1 bis 8 dargestellten Ausführungsbeispielen näher erläutert. Dabei zeigen:
- Fig. 1: eine Beleuchtungseinrichtung, bei der eine Lichtquelle in eine Lichtleitfaser abgebildet wird;
- Fig. 2: ein Diodenzeilenspektrometer mit einer Lichtleitfaser als Eintrittsspalt;
- Fig. 3: ein Diodenzeilenspektrometer mit Beleuchtungseinrichtung und Küvette;
- Fig. 4: ein Diodenzeilenspektrometer mit einer anderen Ausführung der Beleuchtungseinrichtung;
- Fig. 5: ein Spektrometer mit einem Ein- und mehreren Austrittsspalten;
- Fig. 6: ein Spektrometer mit holographischem Konkavgitter;
- Fig. 7: einen Wellenlängen-Demultiplexer und
- Fig. 8: einen Wellenlängen-Multiplexer.

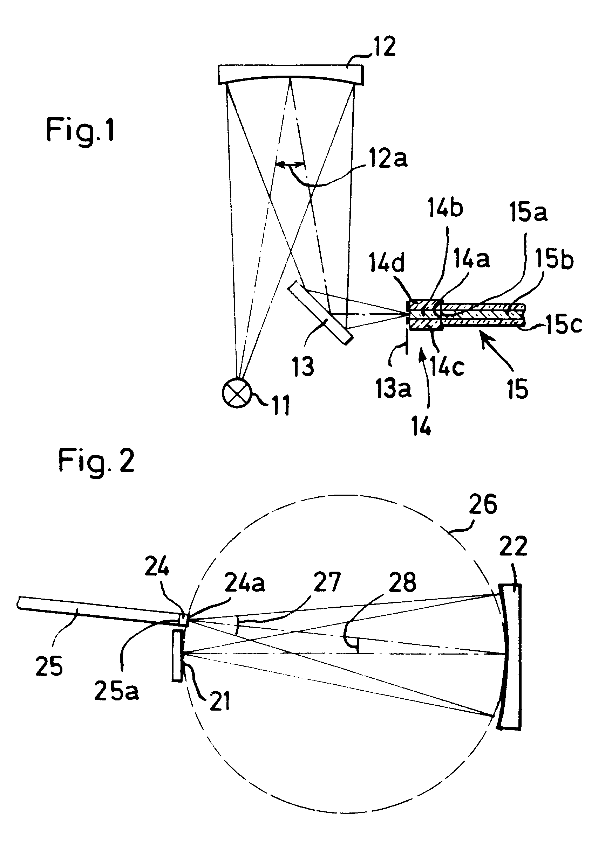

In Figur 1 ist mit 11 eine Lichtquelle, z.B. eine Xenonlampe, bezeichnet, die von dem Konkavspiegel 12 über den Umlenkspiegel 13 in die Lichtleitfaser 15 abgebildet wird. Vor der Eintrittsfläche 15a der Lichtleitfaser 15 ist der Schichtwellenleiter 14 angeordnet. Seine wellenleitende Schicht 14b ist quaderförmig und hat in der Zeichenebene eine Breite 14a, die gleich dem Kerndurchmesser 15b der Lichtleitfaser 15 ist. Senkrecht zur Zeichenebene hat der Schichtwellenleiter eine Höhe, die ein Vielfaches vom Durchmesser des Kernes 15b der Lichtleitfaser 15 ist. Der genaue Wert der Höhe ist unkritisch, wenn ein Mindestwert eingehalten wird. Die wellenleitende Schicht 14b des Schichtwellenleiters 14 sitzt zweckmäßigerweise auf einer Trägerplatte 14c und ist mit einer zweiten Platte 14d abgedeckt, wobei beide Platten eine niedrigere Brechzahl als die wellenleitende Schicht 14b haben. Die Brechzahl der wellenleitenden Schicht wird zweckmäßigerweise mindestens annähernd gleich der Brechzahl des Kernes 15b der Lichtleitfaser 15 gewählt.

Aufgrund der physikalischen Wirkungsweise der wellenleitenden Schicht 14b ist es natürlich auch möglich, an Stelle einer oder beider Platten 14c und 14d die wellenleitende Schicht 14b durch Luft zu begrenzen. Ebenso kann bei der Lichtleitfaser 15 der Mantel 15c durch Luft ersetzt werden.

Die Wirkung des Schichtwellenleiters 14 zeigt folgendes Zahlenbeispiel: Radius des Konkavspiegels 12: 100 mm, d.h. Brennweite 50 mm; Durchmesser des Konkavspiegels 12: 40 mm; Umlenkwinkel 12a des Konkavspiegels: 19°. Ohne Schichtwellenleiter 14 würde eine punktförmige Lichtquelle 11 in der Bildebene 13a eine Zerstreufigur mit einer Ausdehnung von ca. 2,3 mm senkrecht zur Zeichenebene und mit einer Projektion von ca. 65 µm in die Zeichenebene ergeben. Durch den Schichtwellenleiter 14 aus SF 10 mit einer Länge von 9,85 mm wird diese Zerstreufigur in der Eintrittsfläche 15a der Lichtleitfaser 15 auf ca. 56 µm senkrecht zur Zeichenebene und in der Zeichenebene entsprechend der Schichtwellenleiterdicke 14b reduziert; d.h. bei einem Kerndurchmesser 15b von z.B. 50 µm der Lichtleitfaser 15 und einer Xenonlampe als Lichtquelle tritt durch den Schichtwellenleiter 14 ein um den Faktor 30 größerer Strahlungsfluß in die Lichtleitfaser 15 ein als ohne den Schichtwellenleiter. Der Schichtwellenleiter muß eine Höhe von mindestens 2,3 mm haben.

Es ist natürlich auch möglich, z.B. einen torischen Konkavspiegel zu verwenden, der den Astigmatismus zum Teil korrigiert, und den Rest des Astigmatismus mit einem Schichtwellenleiter zu korrigieren. Das gilt entsprechend auch für die folgenden Beispiele.

Da der Schichtwellenleiter - wie das angegebene Zahlenbeispiel zeigt - verhältnismäßig dünn ist und damit seine Herstellung als Einzelteil schwierig wäre, ist es zweckmäßig ihn z.B. auf folgende Weise herzustellen: Auf die optisch polierte Fläche der Trägerplatte 14c wird aus dem Glas für den Schichtwellenleiter eine dünne, aber noch gut handhabbare Platte, die ebenfalls eine optisch polierte Fläche hat, aufgekittet oder aufgesprengt. Anschließend wird die aufgekittete oder aufgesprengte Platte abgeschliffen und poliert bis sie die gewünschte Dicke für die wellenleitende Schicht hat. Auf diese Oberfläche wird dann gegebenenfalls die Abdeckplatte 14d aufgekittet oder aufgesprengt.

Zur Herstellung der wellenleitenden Schicht kommt auch das in letzter Zeit bekannt gewordene Verfahren der Ionenimplantatian bzw. des Ionenaustausches in Frage, mit dem sich in Gläsern die Brechzahl in definierter Weise und definierter Dicke an der Oberfläche verändern läßt (siehe z.B. Lilienhof e.a. Optics Communications 35, 49 (1980)).

Figur 2 zeigt ein Diodenzeilenspektrometer mit einer Lichtleitfaser 25, von der nur der Kern gezeichnet ist und deren Endfläche 25a als Eintrittsspalt für das Spektrometer dient. An die Endfläche angesetzt ist der Schichtwellenleiter 24 von dem ebenfalls nur die wellenleitende Schicht gezeichnet ist und der ebenfalls in der Zeichenebene eine Breite hat, die gleich dem Kerndurchmesser 25a der Lichtleitfaser 25 ist. Als dispergierendes Element dient ein Konkavgitter 22 und als Empfänger wird eine Diodenzeile 21 verwendet. Konkavgitter 22, Diodenzeile 21 und Eintrittsspalt 25a, bzw. die Endfläche 24a des Schichtwellenleiters 24 liegen in bekannter Weise auf dem Rowlandkreis 26.

Die Wirkung des Schichtwellenleiters 24 zeigt das folgende Zahlenbeispiel: Radius des Konkavgitters 22: 200 mm, d.h. Durchmesser des Rowlandkreises 26: 200 mm; Durchmesser des Kankavgitters 80 mm; Eintrittsöffnung 27: 1:2,5; Einstrahlwinkel 28: 5,16°; Furchendichte des Konkavgitters 150 Linien/mm; Wellenlängenbereich 400-800 nm; Spektrenlänge auf dem Empfänger 21: 12 mm. Ohne Schichtwellenleiter 24 würde ein Punkt in der Ebene des Eintrittsspaltes 25a (wenn dieser auf dem Rowlandkreis 26 liegt) auf der Empfängerfläche 21 eine Zerstreufigur ergeben, die in Furchenrichtung (d.h. senkrecht zur Zeichenebene) eine Abmessung von 0,63 mm hat. Durch den Schichtwellenleiter 24 aus SF 10 mit einer Länge von 2,74 mm wird dieser Wert auf 4,3 µm reduziert. Da gängige Diodenzeilen in Furchenrichtung eine Ausdehnung von 25 µm haben, erhält der Empfänger durch den Schichtwellenleiter 24 einen um den Faktor 20 größeren Strahlungsfluß. In Dispersionsrichtung wird die Zerstreufigur von maximal 36 µm (mathematisch) gefaltet mit der Dicke des Schichtwellenleiters; d.h. sie kann unterhalb der Auflösungsgrenze gängiger Diodenzeilen gehalten werden.

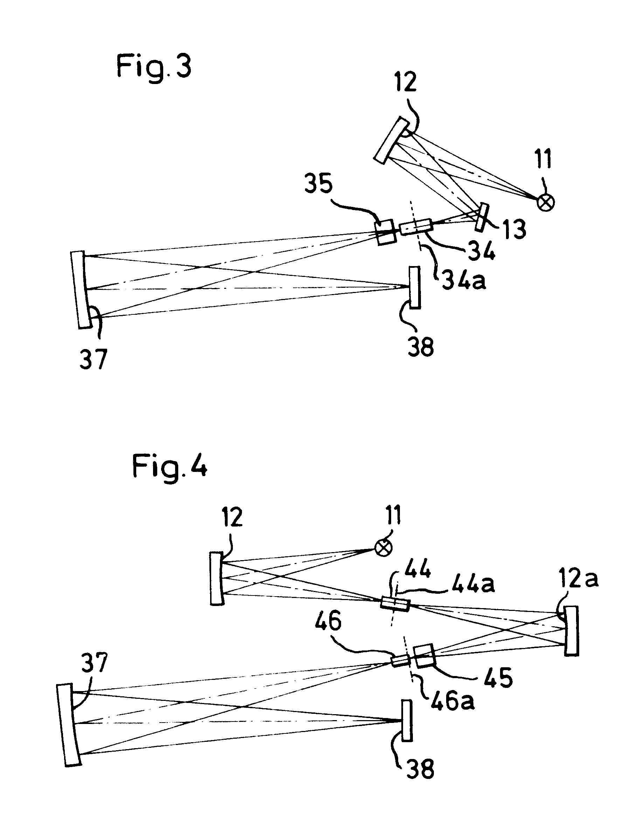

In Figur 3 ist ein vollständiges Diodenzeilenspektrometer mit Beleuchtungseinrichtung und Küvette dargestellt. Die Beleuchtungseinrichtung entspricht dabei der in Figur 1 gezeigten, wobei lediglich die Lichtquelle 11 in die Ebene 34a abgebildet wird, welche dicht vor der Küvette 35 liegt. Vor und nach der Ebene 34a ist der Schichtwellenleiter 34 angeordnet. Mit dem (in Lichtrichtung gesehen) vor der Ebene 34a angeordneten Teil des Schichtwellenleiters 34 erfolgt die Abbildungskorrektur für den Beleuchtungsteil; mit dem nach der Ebene 34a angeordneten Teil des Schichtwellenleiters 34 erfolgt die Abbildungskorrektur für den folgenden Spektrometerteil, der aus dem Konkavgitter 37 und der Diodenzeile 38 besteht. Auf diese Weise wird erreicht, daß mit einem Schichtwellenleiter zwei Abbildungssysteme korrigiert werden. Man muß dabei lediglich in Kauf nehmen, daß in dem Küvette 35 eine anamorphotische Ausleuchtung erfolgt, d.h. in der Küvette hat das Lichtbüschel senkrecht zur Zeichenebene eine größere Ausdehnung als in der Zeichenebene. Bei vielen Anwendungsfällen ist dies kein Nachteil. Wenn z.B. der Meßraum der Küvette den Strahlengang beschneidet, ist damit lediglich ein geringer Energieverlust verbunden, der oft in Kauf genommen werden kann.

Für Anwendungsfälle, bei denen in der Küvette eine in allen Richtungen gleiche Ausdehnung des Lichtbüschels notwendig oder vorteilhaft ist, zeigt die Figur 4 eine abgewandelte Ausführung der Beleuchtungseinrichtung. Dabei wird das vom ersten Konkavspiegel 12 in die Ebene 44a abgebildete Bild der Lichtquelle 11 von dem zweiten Konkavspiegel 12a in die Ebene 46a dicht hinter der Küvette 45 abgebildet. Für beide Abbildungssysteme der Beleuchtungseinrichtung wird ein gemeinsamer Schichtwellenleiter 44 verwendet. Für den folgenden Spektrometerteil, der wieder aus dem Konkavgitter 37 und dem Empfänger 38 besteht, ist zur Korrektur des Astigmatismus der Schichtwellenleiter 46 vorgesehen, der an die Ebene 46a angesetzt ist. Die Küvette 45 befindet sich unmittelbar vor dieser Ebene, das Lichtbüschel hat daher für eine punktförmige Lichtquelle 11 in der Küvette 45 senkrecht zur Zeichenebene die gleiche Ausdehnung wie in der Zeichenebene.

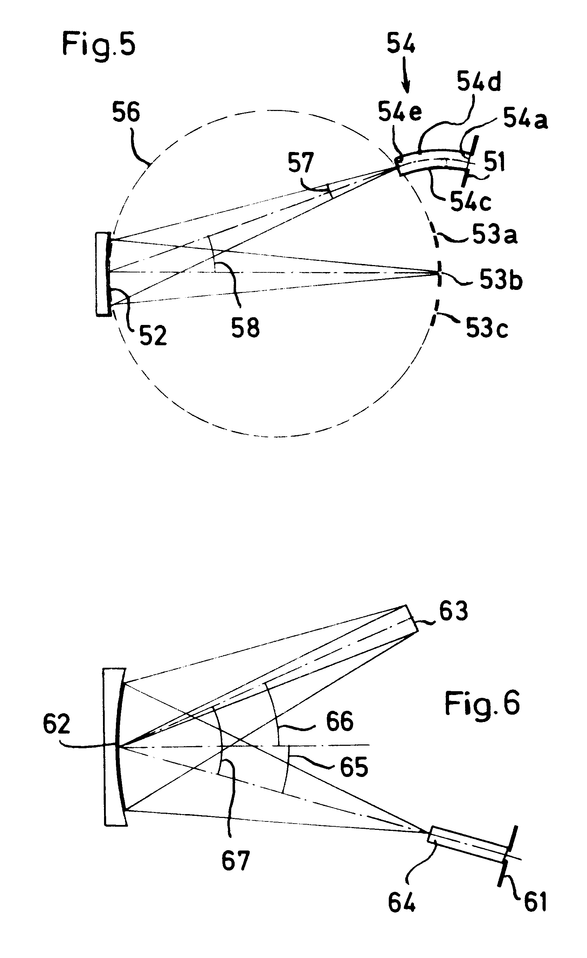

Figur 5 zeigt ein Spektrometer mit einem Eintrittsspalt 51 und mehreren Austrittsspalten 53a, 53b, 53c als Beispiel für einen Schichtwellenleiter mit gekrümmten reflektierenden Flächen. Das Konkavgitter 52 und die Austrittsspalte 53a, 53b, 53c liegen wieder auf dem Rawlandkreis 56. Der Eintrittsspalt 51 würde üblicherweise auch auf dem Rowlandkreis 56 liegen. Bei der erfindungsgemäßen Verwendung des Schichtwellenleiters liegt jedoch das Ende 54e des Schichtwellenleiters auf dem Rowlandkreis 56 und der Eintrittsspalt 51 sitzt unmittelbar vor dem Anfang 54a des Schichtwellenleiters 54. Die reflektierenden Flächen 54c und 54d sind konzentrisch gekrümmte Kreisflächen, deren gemeinsamer Mittelpunkt auf dem Rowlandkreis 56 etwa in der Mitte des ausgenutzten Spektrums liegt. Auf diese Weise wird zusätzlich zur Korrektur des Astigmatismus eine Korrektur der sagittalen Koma erreicht.

Die Wirkung des Schichtwellenleiters 54 verdeutlicht das folgende Zahlenbeispiel: Radius des Konkavgitters 52: 200 mm, d.h. Durchmesser des Rowlandkreises 56: 200 mm; Durchmesser des Konkavgitters 40 mm; Eintrittsöffnung 57: 1:5; Einstrahlwinkel 58: 21,1°; Furchendichte des Konkavgitters 600 Linien/mm; Wellenlängenbereich 400-800 nm; Spektrenlänge auf dem Rowlandkreis 56: 48 mm. Ohne Schichtwellenleiter 54 würde ein Punkt in der Ebene des Eintrittsspaltes 51 (wenn dieser auf dem Rowlandkreis 56 liegt) in der Eben e der Spalte 53a, 53b, 53c eine Zerstreufigur ergeben, die in Furchenrichtung (d.h. senkrecht zur Zeichenebene) eine Abmessung von 5,56 mm hat. Durch einen quaderförmigen Schichtwellenleiter aus PSK 3 mit einer Länge von 43,09 mm wird dieser Wert auf 93 µm reduziert. Durch den in Figur 5 dargestellten Schichtwellenleiter 54 mit zwei konzentrischen Kugelflächen 54c und 54d mit einem Krümmungsradius von 73 mm und einer Bogenlänge von 41,0 mm erfolgt eine weitere Reduzierung der Zerstreufigur in Furchenrichtung von 93 µm auf 2,5 µm und in Dispersionsrichtung von 52 µm auf 7,9 µm. Die Dicke des Schichtwellenleiters wird zweckmäßigerweise gleich der Breite des Eintrittsspaltes gewählt, also z.B. 10 µm.

Es ist bekannt, daß sich der Astigmatismus von holographischen Konkavgittern durch geeignete Wahl der Quellpunkte bei der Erzeugung der holographischen Gitter korrigieren läßt. Das führt meist jedoch Zu verhältnismäßig kleinen Winkeln zwischen Einstrahlrichtung und Gitternormale bzw. Spektrum und damit zu geometrischen Anordnungen, die oft ungünstig für die praktische Realisierung sind. Durch Verwendung eines Wellenleiters am Eintrittsspalt des Spektrometers läßt sich - wie am Beispiel der Figur 6 gezeigt wird - der Winkel zwischen Eintrittsspalt 61 und Spektrum 63 erweitern, ohne daß die Astigmatismuskorrektion darunter leidet.

In Figur 6 ist mit 62 ein holographisches Konkavgitter bezeichnet, auf das die vom Eintrittsspalt 61 kommende Strahlung unter einem Winkel 65 von 15,5° gegenüber der Gitternormalen mit der großen Eintrittsöffnung von 1:2,5 auftrifft. Die vom Konkavgitter 62 reflektierte Strahlung hat für die Mitte des Wellenlängenbereiches von 360 bis 780 nm zu der Gitternormalen einen Winkel 66 von 24°, wobei das Spektrum in der Ebene 63 eine Länge von 3,2 mm hat. Insgesamt beträgt der Umlenkwinkel 67 also 39,5°; er ist damit wesentlich größer als der größte Umlenkwinkel von 20°, der sich bei bekannter Astigmatismuskorrektur für holographische Gitter erreichen läßt. Die Wirkung des Schichtwellenleiters 64 für den in Figur 6 gezeichneten Umlenkwinkel von 39,5° zeigt das folgende Zahlenbeispiel : Konkavgitterradius 29,078 mm; Konkavgitterdurchmesser 11,1 mm; mittlere Furchendichte des Konkavgitters 246,5 Linien/mm; Eingangsschnittweite 27,77 mm; Ausgangsschnittweite 27,77 mm. Durch den Schichtwellenleiter 64 aus SF 10 mit einer Länge von 6,9 mm wird für einen Punkt in der Ebene des Spaltes 61 die Zerstreufigur in der Spektrenebene 63 senkrecht zur Zeichenebene von 1,4 mm auf 28 µm reduziert; in der Dispersionsrichtung erhält man eine Zerstreufigur von maximal 75 µm.

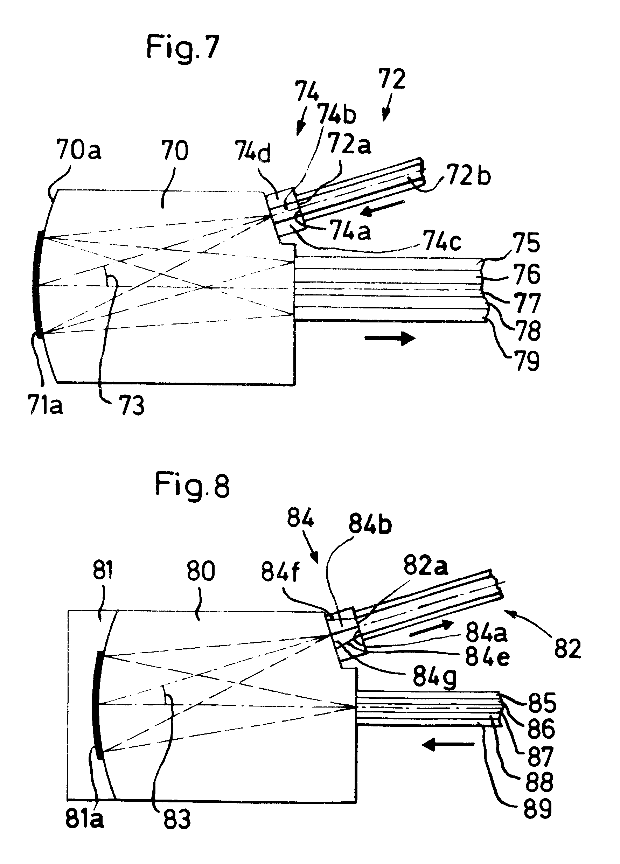

Figur 7 zeigt als weiteres Ausführungsbeispiel einen Demultiplexer für die faseroptische Informationsübertragung. Derartige Demultiplexer bestehen heute häufig zugunsten einer kompakten und robusten Ausführung aus einem Glas- oder Kunststoffkörper, der die notwendigen optischen Bauteile enthält oder an den sie angekittet sind. Verwendet man zugunsten eines möglichst einfachen Aufbaues normale Konkavgitter, dann sind die optischen Eigenschaften durch den Astigmatismus des Konkavgitters unbefriedigend.

In Figur 7 ist mit 70 ein Glas- oder Kunststoffkörper bezeichnet auf dessen konvexe Fläche 70a das Konkavgitter 71a in bekannter Technik aufkopiert und mit einer Spiegelschicht versehen wurde. Die aufzuteilende Strahlung wird dem Demultiplexer über die Lichtleitfaser 72 zugeführt, deren Kern 72b z.B. einen Durchmesser von 50 µm hat. Zwischen dem Ende 72a der Lichtleitfaser 72 und dem Glas- oder Kunststoffkörper 70 ist ein Schichtwellenleiter 74 angeordnet, dessen wellenleitende Schicht 74b in der Zeichenebene die gleiche Dicke 74a wie der Kern 72b der Lichtleitfaser hat. Senkrecht zur Zeichenebene hat die quaderförmige wellenleitende Schicht 74b eine wesentlich größere Ausdehnung, die unkritisch ist, wenn ein Mindestwert eingehalten wird. Die wellenleitende Schicht 74b ist im vorliegenden Fall z.B. aus SF 10 und sitzt zwischen den Glasplotten 74c und 74d aus F 2.

Die aus der Lichtleitfaser 72 kommende Strahlung gelangt durch den Schichtwellehleiter 74 auf das Konkavgitter 71a und wird von diesem in die einzelnen Wellenlängen zerlegt, die von den Lichtleitfasern 75 bis 79 aufgenommen werden. Letztere haben einen Kerndurchmesser von z.B. 200 µm, so daß geringe Verschiebungen der Wellenlängen (z.B. infolge der Toleranzen der Sendedioden) und geringe Toleranzen des gesamten Aufbaues des Demultiplexers ausgeglichen werden.

Die Wirkung des Schichtwellenleiters 74 zeigt das folgende Zahlenbeispiel: Material des Glaskörpers 70: SF 10; Konkavgitterradius 63,551 mm; Gitterdurchmesser 17,3 mm; Furchendichte 248 Linien/mm; Lineordispersion 107,64 nm/mm; Eingangsschnittweite 62,3 mm; Ausgangsschnittweite 63,5 mm; Einstrahlwinkel 73: 11,38°; Wellenlängenbereich 1100 bis 1600 nm mit 17 Kanälen. Durch den Schichtwellenleiter 74 mit einer Länge von 2,52 mm und einer Höhe von mindestens 0,74 mm wird die Zerstreufigur mit einer Ausdehnung von 0,69 mm in Furchenrichtung auf 13 µm reduziert. Dadurch gelangt ein um den Faktor 3,7 größerer Strahlungsfluß in die Ausgangslichtleitfasern.

Bei einer vorteilhaften Ausführungsform besteht das Konkavgitter 71a in bekannter Weise (siehe z.B. M.C. Hutley, Diffraction Gratings, London 1982) z.B. aus drei nebeneinander liegenden Bereichen, die mit verschieden geformten Diamantsticheln geteilt sind, so daß die durch die Krümmung des Konkavgitters bedingte Änderung der Blozewellenlänge auf 1/3 reduziert wird.

Als letztes Ausführungsbeispiel zeigt Fig. 8 einen Multiplexer. Bei diesem ist in einer anderen bekannten Ausführungsform das Konkavgitter 81a auf ein separates Teil 81 kopiert und gemeinsam mit diesem auf den Glas- oder Kunststoffkörper 80 aufgekittet. Das Konkavgitter bildet alle durch die Eingangslichtleitfasern 85 bis 89 ankommenden Strahlungen mit verschiedenen Wellenlängenbereichen in die Ausgangsfaser 82 ab. Zwischen dem Glas- oder Kunststoffkörper 80 und der Ausgangslichtleitfaser 82 sitzt der Schichtwellenleiter 84. Dieser bringt bereits bei quaderförmiger Ausbildung der wellenleitenden Schicht eine wesentliche Verbesserung der Abbildungseigenschaften des Konkavgitters. Im in Figur 8 dargestellten Ausführungsbeispiel sind die reflektierenden Flächen 84e und 84f des Schichtwellenleiters 84b keilförmig zueinander ausgebildet, wobei der Abstand 84a dieser Flächen am Ende des Schichtwellenleiters gleich dem Kerndurchmesser 82a der Ausgangslichtleitfaser 82 ist. Durch diese keilförmige Ausbildung der reflektierenden Flächen können nicht nur Toleranzen in den Abmessungen aller optischen Teile aufgefangen werden, sondern auch Toleranzen in den Wellenlängenbereichen der durch die Eingangslichtleitfasern zugeführten einzelnen Strahlungen, ohne den Kerndurchmesser der Ausgangslichtleitfaser über das übliche oder vorteilhafte Maß zu vergrößern.

Die Wirkung des Schichtwellenleiters für dieses Ausführungsbeispiel zeigt das folgende Zahlenbeispiel: Material des Glaskörpers 80: SF 10; Konkavgitterradius = Eingangsschnittweite 50,845 mm; Gitterdurchmesser 9,55 mm; Furchendichte 183,13 Linien/mm; Lineardispersion 182,2 nm/mm; Ausgangsschnittweite 50,302 mm; Ausfallwinkel 83: 8,38°; Wellenlängenbereich 1100-1600 nm mit 17 Kanälen; Kerndurchmesser der Eingangslichtleitfasern 10 µm. Durch einen quaderförmigen Schichtwellenleiter aus SF 10 mit einer Länge von 1,091 mm und einer Mindesthöhe von 0,25 mm wird die Zerstreufigur in Furchenrichtung von 0,2 mm auf 0,6 µm reduziert. Dadurch gelangt ein um den Faktor 4 größerer Strahlungsfluß in die Ausgangslichtleitfaser. Durch die konische Ausbildung des Schichtwellenleiters 84 mit einer Breite von 50 µm auf der Faserseite 84a und 100 µm auf der Gitterseite 84g wird die Wellenlängentoleranz pro Kanal von 6,8 nm auf 15,9 nm erhöht.

## Patentansprüche

1. Optische Abbildungsanordnung für die Abbildung eines Lichtleitfaserendes (15, 25) oder eines Spektrometerspalts (61), mit einem abbildenden Element in Form eines konkaven Spiegels (12) oder Gitters (71a, 81a), in dessen Bild - oder Objektebene das Ende der Lichtleitfaser oder der Spektrometerspalt angeordnet ist,
gekennzeichnet durch
ein Astigmatismuskorrekturelement, bestehend aus einem Stück Schichtwellenleiter, dessen eine Stirnfläche am Ort des Bildes in der Bildebene oder am Ort des Objektes in der Objektebene angeordnet ist und dessen Länge kleiner als der Abstand zwischen Bild- oder Objektebene einerseits und dem konkaven Spiegel (12) oder Gitter (71a, 81a) andererseits ist.

2. Optische Anordnung nach Anspruch 1, dadurch gekennzeichnet, daß der Schichtwellenleiter (54) gekrümmte reflektierende Flächen (54c, 54d) hat.

3. Optische Anordnung nach Anspruch 2, dadurch gekennzeichnet, daß die reflektierenden Flächen (54c, 54d) des Schichtwellenleiters (54) konzentrische Kugelflächen sind.

4. Optische Anordnung nach einem der Ansprüche 1 bis 2, dadurch gekennzeichnet, daß die reflektierenden Flächen (84e, 84f) des Schichtwellenleiters (84) zueinander keilförmig sind.

5. Optische Anordnung nach einem der Ansprüche 1 oder 4, gekennzeichnet durch die Ausbildung als Beleuchtungseinrichtung (Figur 1) mit einem Konkavspiegel (12) und einer Beleuchtungsquelle (11).

6. Optische Anordnung nach einem der Ansprüche 1 bis 3, gekennzeichnet durch die Ausbildung als Spektrometer (Figur 2 bis 6) mit einem Konkavgitter (22, 37, 52, 62).

7. Optische Anordnung nach einem der Ansprüche 1 bis 4, gekennzeichnet durch die Ausbildung als Wellenlängen-Multiplexer (Figur 8) oder Demultiplexer (Figur 7) mit einem Konkavgitter (71a, 81a).

8. Optische Anordnung nach Anspruch 6 oder Anspruch 7, dadurch gekennzeichnet, daß das Konkavgitter (z.B. 22, 71a) aus mindestens zwei Bereichen aufgebaut ist, die mit unterschiedlich geformten Diamantsticheln geteilt sind.

9. Optische Anordnung nach einem der Ansprüche 1 bis 6, dadurch gekennzeichnet, daß eine zweite Anordnung (Figur 3, 4) mit einem Konkavspiegel oder -gitter angeschlossen ist und daß für beide Anordnungen ein gemeinsamer Schichtwellenleiter (34, 44) vorgesehen ist.

10. Optische Anordnung nach einem der Ansprüche 1 bis 9, dadurch gekennzeichnet, daß die Brechzahlen der wellenleitenden Schicht (14b, 24, 74b) des Schichtwellenleiters und vom Kern (15b, 25, 72b) einer angesetzten Lichtleitfaser mindestens annähernd gleich sind.

## Claims

1. Optical imaging arrangement for the imaging of the end of a light conducting fiber (15, 25) or of a spectrometer slit (61), with an imaging element realized as a concave mirror (12) or grating (71a, 81a), the end of the light conducting fiber or the spectrometer slit being arranged in its image or object plane, characterized by an element correcting astigmatism constituted by a piece of a layered slab waveguide, having one end face located at the image in the image plane or at the object in the object plane, being shorter than the distance between either the image or the object plane and the concave mirror (12) or grating (71a, 81a).

2. Optical arrangement according to claim 1, wherein the. slab waveguide (5) has curved reflecting surfaces (54c, 54d).

3. Optical arrangement according to claim 2, wherein the reflecting surfaces (54c, 54d) of the slab waveguide (54) are concentric spherical surfaces.

4. Optical arrangement according to one of claims 1 or 2, wherein the reflecting surfaces (84e, 84f) of the slab waveguide (84) conjointly define a wedge.

5. Optical arrangement according to one of claims 1 or 4, wherein it is realized as an illuminating device (figure 1) with a concave mirror (12) and a light source (11).

6. Optical arrangement according to one of the claims 1 to 3, wherein it is realized as a spectrometer (figures 2 to 6) with a concave grating (22, 37, 52, 62).

7. Optical arrangement according to one of the claims 1 to 4, wherein it is realized as a wavelength-multiplexer (figure 8) or a demultiplexer (figure 7) with a concave grating (71a, 81a).

8. Optical arrangement according to claim 6 or 7, wherein the concave grating (e.g. 22, 71a) is constituted by at least two zones ruled by two diamond styluses being formed differently from one another.

9. Optical arrangement according to one of claims 1 to 6, comprising a second arrangement (figures 3, 4) with a concave mirror or grating, with one slab waveguide (34, 44) serving both arrangements.

10. Optical arrangement according to one of claims 1 to 9, wherein the index of refraction of the wave-guiding layer (14b, 24, 74b) of the slab waveguide at least approximately equals that of the core (15b, 25, 72b) of an attached light-conducting fiber.

## Revendications

1. Dispositif optique de reproduction pour la formation de l'image de l'extrémité d'une fibre optique (15, 25) ou de la fente d'un spectromètre (61), comprenant un élément de reproduction sous la forme d'un miroir concave (12) ou d'un réseau concave (71a, 81a), dans le plan d'image ou dans le plan objet duquel est disposée l'extrémité de la fibre optique ou la fente du spectromètre,
caractérisé par
un élément de correction de l'astigmatisme, constitué d'un tronçon de guide d'ondes à couche dont une face d'extrémité est disposée au droit de l'image dans le plan d'image ou au droit de l'objet dans le plan objet et dont la longueur est inférieure à la distance entre le plan d'image ou le plan objet d'une part et le miroir concave (12) ou le réseau concave (71a, 81a) d'autre part.

2. Dispositif optique selon la revendication 1, caractérisé en ce que le guide d'ondes à couche (54) possède des surfaces réfléchissantes courbes (54c, 54d).

3. Dispositif optique selon la revendication 2, caractérisé en ce que les surfaces réfléchissantes (54c, 54b) du guide d'ondes à couche (54) sont des surfaces sphériques concentriques.

4. Dispositif optique selon la revendication 1 ou 2, caractérisé en ce que les surfaces réfléchissantes (84e, 84f) du guide d'ondes à couche (84) sont disposées en coin l'une par rapport à l'autre.

5. Dispositif optique selon la revendication 1 ou 4, caractérisé par sa réalisation comme un dispositif d'éclairage (figure 1) comportant un miroir concave (12) et une source d'éclairage (11).

6. Dispositif optique selon une des revendications 1 à 3, caractérisé par sa réalisation comme un spectromètre (figures 2 à 6) comportant un réseau concave (22, 37, 52, 62).

7. Dispositif optique selon une des revendications 1 à 4, caractérisé par sa réalisation comme un multiplexeur de longueurs d'onde (figure 4) ou comme un démultiplexeur de longueurs d'onde (figure 7) comportant un réseau concave (71a, 81a).

8. Dispositif optique selon la revendication 6 ou 7, caractérisé en ce que le réseau concave (par exemple 22, 71a) est composé d'au moins deux zones divisées au moyen de burins diamantés de formes différentes.

9. Dispositif optique selon une des revendications 1 à 6, caractérisé en ce qu'un second dispositif (figures 3, 4) comportant un miroir concave ou un réseau concave y est raccordé et qu'un guide d'ondes à couche commun (34, 44) est prévu pour les deux dispositifs.

10. Dispositif optique selon une des revendications 1 à 9, caractérisé en ce que les indices de réfraction de la couche guide d'ondes (14b, 22, 74b) du guide d'ondes à couche et du coeur (15b, 25, 72b) d'une fibre optique qui y est accolée sont au moins approximativement égaux.
